# EUROPEAN PATENT APPLICATION

(11) **EP 2 910 978 A1**
(43) Date of publication of application: **26.08.2015**
(21) Application number: 14305230.6
(22) Date of filing: 20.02.2014
(51) Int. Cl.: G01V 1/38, G01V 1/20, B63B 22/12

(54) **Retriever system for a streamer**

(71) Applicant: Sercel, 44470 Carquefou (FR)
(72) Inventor: Roger, Thierry, 44200 NANTES (FR)
(74) Representative: Vidon Brevets & Stratégie

(57) **Abstract**

It is proposed a retriever system (40) for a streamer including:
- a body (41), placed in series along the streamer or in parallel with the streamer,
- an inflating generator (51) and
- an inflatable element (52) being configured to be folded in a rest state and to be inflated by the inflating generator (51) and spread in an active state, the inflatable element (52) having a shape of a wing in the active state and including two different portions, a first portion including a leading edge (65) and a second portion including a trailing edge (66), the passage from the rest state to the active state being activated in predetermined conditions.

## Description

### 1. Field of the invention

The field of the invention is the acquisition of geophysics data. It deals with the equipment required in order to study the seabed and its sediment layers properties.

More specifically, the invention relates to a retriever system for a streamer, such a retriever system being useful in case of a failure, for example failure of the streamer or of the vessel, or an excessive depth of the streamer or a navigation control device (also commonly called "bird"), or a lost of control of a bird. A bird is adapted for controlling the depth and/or the lateral position of a towed acoustic linear antenna (commonly referred to as "streamer").

The invention can be applied notably to the oil prospecting industry using seismic method (sea oil survey), but can be of interest for any other field, which requires a system performing geophysics data acquisition in a marine environment.

### 2. Technological background

It is sought more particularly here below in this document to describe problems existing in the field of seismic data acquisition for oil prospecting industry. The invention of course is not limited to this particular field of application but is of interest for any technique that has to cope with closely related or similar issues and problems.

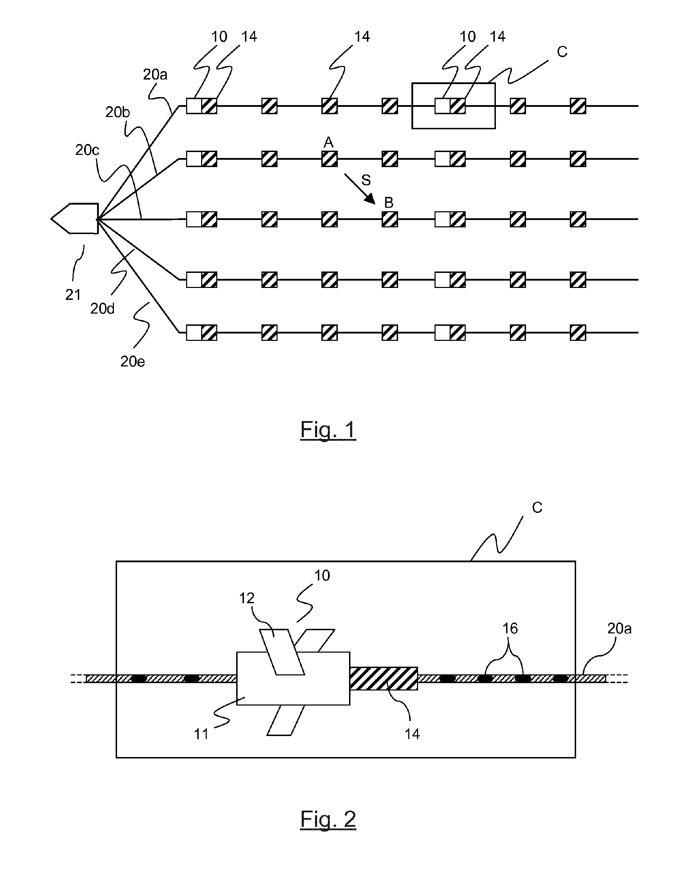

The operations of acquiring seismic data on site conventionally use networks of seismic sensors, like accelerometers, geophones or hydrophones. We consider below the context of seismic data acquisition in a marine environment, in which the seismic sensors are hydrophones. The hydrophones are distributed along cables in order to form linear acoustic antennas (also referred to as "streamers" or "seismic streamers"). As shown in **figure 1****,** a seismic vessel 21 tows the network of seismic streamers 20a to 20e. The hydrophones are referenced 16 in **figure 2****,** which illustrates in detail the block referenced C in figure 1 (i.e. a portion of the streamer referenced 20a).

The seismic method is based on an analysis of reflected seismic waves. Thus, to collect geophysical data in a marine environment, one or more submerged seismic sources are activated in order to propagate omnidirectional seismic wave trains. The pressure wave generated by the seismic source(s) passes through the column of water and propagates through the different layers of the seabed. The reflected seismic waves (i.e. reflected acoustic signals) are then detected by the hydrophones distributed over the length of the seismic streamers. These acoustic signals are processed and retransmitted by telemetry from the seismic streamers to the operator station situated on the seismic vessel, where the processing of the raw data is carried out (in an alternative solution, the seismic acoustic signals are stored for a later processing).

During seismic surveys, it is important to precisely locate the streamers in particular for:
- monitoring the position of the hydrophones (distributed along the seismic streamers) in order to obtain a satisfactory precision of the image of the seabed in the exploration zone;
- detecting the movements of the streamers with respect to one another (the streamers are often subjected to various external natural constraints of variable magnitude, such as the wind, waves, currents); and
- monitoring the navigation of streamers, in particular in a situation of bypassing an obstacle (such as an oil barge).

Control of the positions of streamers lies in the implementation of navigation control devices (also referred to as "birds") (white squares referenced 10 in figure 1). They are installed at regular intervals (every 300 meters for example) along the seismic streamers. The function of those birds is to guide the streamers between themselves. In other words, the birds 10 are used to control the depth as well as the lateral position of the streamers. For this purpose, and as illustrated in figure 2, each bird 10 includes a body 11 equipped with motorized pivoting wings 12 (or more generally means of mechanical moving) making it possible to modify the position of the streamers laterally between them (this is referred to a horizontal driving) and drive the streamers in immersion (this is referred to a vertical driving).

To carry out the localization of the seismic streamers (allowing a precise horizontal driving of the streamers by the birds), acoustic nodes are distributed along the streamers. These acoustic nodes are represented by hatched squares, referenced 14, in figures 1 and 2. As shown in figure 1, some acoustic nodes 14 of the network are integrated in a bird 10 (case of figure 2), and others are not.

Birds must be reliable and robust to keep depth and lateral control on the equipment constituted by the birds themselves and by the instrumented cables of the streamers.

As any electromechanical equipment, a bird can face internal failures that can lead to a loss of control. Furthermore, a bird and a sub-sea equipment are exposed to harsh environment, such as ice, fishing nets or debris, that can damage it, the bird being then likely to breaking down, not responding to the orders, or loosing control.

In case of loss of control or other failure of a bird, the following damages can occur:
- sensors can be affected by an excessive depth of the streamer,
- there can be a mechanical deformation on cable and/or birds due to excessive depth, overload, excessive torsion or tangle between the cables.

Other external failures may occur such as the failure of the vessel or of the monitoring system, leading to damages of the sensors and/or birds and/or streamers. Indeed, as already said, the streamers and birds are exposed to a harsh environment, and a portion of streamer may be cut, for example by a shark, an excessive tension or an excessive twisting or by hanging to an anchor.

A known solution is to add additional equipment, commonly called "retriever". The retriever is configured to surface the bird and a portion of the instrumented cable of the streamer around the bird.

Such a retriever is for example known from US 5 404 339. The retriever is activated only if the depth is excessive. The retriever has a preset depth to inflate and cannot be remotely operated. In this document, the retriever consists of a big bag and a bottle of gas for blowing the bag when predetermined excessive depth is reached by the retriever. Such a retriever has a number of disadvantages, such as a high frontal area at non-null speed. Indeed, the frontal area of such a big bag, which volume is generally over 200 litres, is quite high at non-null speed, so that it generates high levels of drag and stress on the bag and on the anchorage points and the fixation or anchorage points are likely to break or the bag itself may be damaged. The buoyancy and noise of the big bag are excessive so that they affect the operation as soon as the bag is inflated. The big bags, once on surface, are exposed to swell, which generates high levels of stress on the bag and on the anchorages points.

Another known retriever is disclosed in US 6 612 886. Such retriever consists of an integrated retriever system including an inflatable bag and placed in series with the streamer cable. Streamers are usually deployed into the sea or retrieved from the sea thanks to a drum on which streamers are winded. As the retriever system is integrated to the streamer, it is also winded with the streamer and has not to be removed before winding. However, due to the fact that the system is placed inside the cable (streamer), the bag has to be smaller so that the buoyancy is lower with such a system.

This retriever system foresees a predetermined depth at which the retriever system is activated. It is also to be noted that, in the retriever system of US 6 612 886, a mechanical arm is added so as to provide reinforcement to the envelope of the retriever system for protecting it from damages when winded but this mechanical arm is a harmful element for the bag when inflated.

Another known retriever system is disclosed in US 2013/0213291. The retriever system is positioned into a bird, in the wings or in the body. The operator may activate at a predetermined depth or at any moment such a retriever system from the vessel. As previously said, the retriever including a gas bottle and an inflatable bag is a voluminous system, which is not compatible with the necessary thin size and shape of the wings. Indeed a wing has to be thin for hydro performance of the bird. Thus, a bag that is housed in a wing is necessary small, as a bag is limited by its coefficient of expansion. Consequently, this solution is not very efficient for bringing the streamer and bird to the surface, as the bag is smaller. Furthermore, the inflating generators with CO2 or with powder and cooling system are bulky and not compatible to be integrated in the wing. If the retriever is housed in the body, the proposed system has similar disadvantages than the retriever system of US 6 621886.

### 3. Goals of the invention

The invention, in at least one embodiment, is aimed especially at overcoming these different drawbacks of the prior art.

More specifically, it is a goal of at least one embodiment of the invention to provide a technique allowing protecting (i.e. maintaining the integrity by stabilizing, avoiding diving, surfacing, etc.) of the equipment (streamer, bird) in case of failure of a bird and/or a streamer and/or the monitoring system and/or the vessel.

It is another goal of at least one embodiment of the invention to provide a technique allowing maintaining at least partially the lateral and/or vertical depth control of the streamer, especially in case of a failure.

It is another goal of at least one embodiment of the invention to provide a technique that is reliable and cost efficient.

It is another goal of at least one embodiment of the invention to provide a technique that limits noise to enable seismic acquisition even if one or few systems are inflated, and that surfaces the equipment if several successive systems are inflated.

### 4. Summary of the invention

A particular embodiment of the invention proposes a retriever system for a streamer including:
- a body, placed in series along the streamer or in parallel with the streamer,
- an inflating generator and
- an inflatable element being configured to be folded in a rest state of the retriever system and to be inflated by the inflating generator and spread in an active state of the retriever system, the inflatable element having a shape of a wing in the active state and including two different portions, a first portion including a leading edge and a second portion including a trailing edge, the passage from the rest state to the active state being activated in predetermined conditions.

Thanks to the shape of a wing of the inflatable element once inflated in the present invention, the inflatable element does not require to have a big volume but a reduced volume, in the range 10 litres to 50 litres for example. This reduced volume restricts the drag of the inflatable element once inflated, even at null speed of the vessel.

In a particular embodiment, the inflating generator and/or the inflatable element are at least partially housed on the body in the rest state. In a particular embodiment, the inflatable element is housed on an external surface of the body in the rest state, whereas the inflating generator may be housed or stored inside the body.

Thanks to this aspect of the invention, there is no need to add a mechanical arm or a trapdoor opening for allowing the blowing up of the inflatable element. This leads therefore to a reduction of the risk of damaging the inflatable element when inflated.

The retriever system goes from the rest state to the active state when a navigation control device and/or the instrumented cable of the streamer and/or the vessel have damages or problems or failures sufficient to activate the retriever system. The damages, problems or failures that are considered sufficient to activate the retriever system may constitute the predetermined conditions. The predetermined conditions may include several predetermined thresholds measured by corresponding sensors, such as a predetermined depth, a detection of an overload of the streamer, a detection of a twist of the streamer detected by accelerometers, and so on. The activation of the retriever system may be automatic or manual, as soon as one or several predetermined thresholds are reached.

The retriever system is preferably placed in series along the streamer. In such embodiment, the body may for example include at least one module and one frame element freely rotating around the at least one module. The frame element may at least partially house the inflatable element. The frame element is preferably tubular. The inflatable element may for example be housed on an external surface of the frame element in the rest state and the inflating generator may be housed inside the frame element.

The body may be part of a navigation control device (or bird) that may include a plurality of wings attached to the body or to the frame element if any, preferably three wings.

In another embodiment, the retriever system may be collocated to a navigation control device.

The inflating generator may be configured for blowing the inflatable element so that the inflatable element goes from the rest state to the inflated (active) state. The inflating generator may be chosen in the group consisting of a gas generator, a foam generator and a powder generator. The inflating generator may for example include a gas bottle housed in the body.

The inflatable element may occupy a large surface of storage on the body, thus minimizing the occupied volume by maximizing the occupied surface. This configuration limits the hydrodynamic impact in the rest state and may make the blowing up more efficient, when the retriever system is activated.

The inflatable element may for example be in contact with water, when folded and inflated. There may be no need to waterproof the inflatable element. A cover may wrap the inflatable element. The cover may for example tear when the inflatable element blows up, going from the rest state to the active state.

The inflatable element may include an internal structure, such as fibre interlacing, for example, so as to create a particular predetermined external shape, when inflated.

According to the invention, the inflatable element takes the shape of a wing, once inflated, in the active state. This is particularly advantageous as the shape of a wing may be optimized to efficiently lift the streamer.

The retriever system generates positive lift of the streamer thanks to the hydrostatic effect of the inflatable element once inflated, i.e. once having the shape of the wing. The volume of such wing is for example in the range 10 to 50 litres. These particular shape and size limit efforts on mechanical anchorages when surfacing and also on surface when the inflatable element is exposed to waves and current.

These size and shape are furthermore adapted and optimized in case of the activation and inflation of the inflatable element at null speed. In such case, the size and shape limit the drag and the efforts on the anchorages and generate a lift together with the buoyancy.

In a particular embodiment, the first portion of the inflatable element including the leading edge may be buoyant when inflated, being full of gas for example and may occupy a predetermined volume, for example in the range 10 to 50 litres when inflated. In this embodiment, the second portion of the inflatable element including the trailing edge may include a rigid or textile component shaped to limit flow turbulence and maximize lift.

The inflatable element is preferably configured to positive lift at least part of the streamer, when activated, for example whatever the position of the retriever system.

In order to guide the lift in the same direction as the buoyancy, it is preferable to provide the inflatable element, once inflated with an angle of attack and to make the following adjustments: either assembling the inflatable element on a swing structure so as to allow the inflatable element to balance with a positive lift, or assembling the inflatable element on a fixed structure and adjusting the mechanical anchorages so as to allow the wing to stabilize.

The retriever system according to the invention may allow stabilizing a bird if the retriever system is collocated with a bird that has lost a wing. In case the body is part of a bird, the corresponding bird may be therefore stabilized by the retriever system having an inflatable element having a shape of a wing once inflated. Indeed, such configuration of wing of the inflatable element when inflated may stabilize the bird rolling as it is configured to resist the rotation of the frame element by creating friction torque and an opposite torque to counteract torque generated by the wings of the bird.

The retriever system may include at least one fixation element, or mechanical anchorage, preferably at least two fixation elements, of the inflatable element for attaching the inflatable element to the body. The fixation elements may be configured, for example, for fixing the inflatable element to the external surface of the body.

When the retriever system is activated, the inflatable element is inflated, as already mentioned, and the fixation elements, which may consist of anchor links, are extended. The fixation elements then form the links between the inflated element and the body. The distance between the inflated element and the body is substantially equal to the length of the extended fixation elements.

In this embodiment, the fixation elements may include at least one rigid fixation element for fixing the first portion of the inflatable element, said rigid fixation element having a predetermined length, and at least one flexible fixation element for fixing the second portion of the inflatable element, said flexible fixation element being configured for being able to occupy two different states, a first loosen state and a second stressed state depending on the configuration of the retriever system, when activated, i.e. when the inflatable element is inflated.

Thanks to this configuration of the fixation elements, the inflatable element is effective, whatever the position of the retriever system.

In one embodiment, the inflatable element may be housed onto a large portion of the external surface of the body, for example 400mm long and 10 mm wide.

The ratio of expansion of the inflatable element when it blows up is high thanks to the fact that the storage surface may be high in that embodiment. The ratio of expansion may be included between 25, which is low, and 70, which is good.

The plurality of wings, in case of the presence of such wings i.e. in case the body being part of a bird, may be fixed to the body at fastening points and include two upper wings and one lower wing. The inflatable element may be configured for placing between the two upper wings, once inflated in the active state. The portion of the external surface of the body onto which the inflatable element is situated when folded may be located between the fastening points of the two upper wings, in this embodiment.

In one example, the inflatable element forming a wing is equipped with a pressure relief valve that limits the internal pressure when the inflatable element moves upward, once inflated. The remaining overpressure is calibrated to match with the textile capabilities and to manage a small leakage once on surface that could lower the internal pressure but keep enough buoyancy after 72 hours. This pressure relief valve may balance eventual overpressures during an undesirable lift of the inflatable element, in the inflated state, for example from 9 to 7 m, due to the wave. In such case, the inflatable element, in the inflated state, lift till 7 m but must not unexpectedly vent. The inflatable element therefore is exposed to overpressures that an internal structure of the inflatable element with interlaced fibres may tolerate.

The retriever system may be configured for being either automatically or manually activated. In such a configuration, an operator on the vessel may easily control the activation of the retriever system, during seismic operations.

In the particular case of the body being part of a bird, said body including a module and a freely rotating frame element, the inflatable element may be housed on an external surface of the freely rotating frame element and the inflating generator may be housed in the freely rotating frame element.

Thanks to this embodiment of the invention, the freely rotating frame element and the wings may be easily removed from the module before or when winding the cable of streamer for storage. Thus, as the retriever system is not winded, when stored, it is protected from damages commonly caused by this operation.

### 5. List of figures

Other features and advantages of embodiments of the invention shall appear from the following description, given by way of an indicative and non-exhaustive examples and from the appended drawings, of which:
- Figure 1, already described with reference to the prior art, presents an example of network of seismic streamers towed by a seismic vessel;
- Figure 2, already described with reference to the prior art, illustrates in detail the block referenced C in figure 1 (i.e. a portion of the streamer);
- Figure 3, already described with reference to the prior art, is a perspective view of a known bird or navigation control device;
- Figure 4 provides a schematic illustration of a retriever system according to an embodiment of the invention including a navigation control device and a in a rest state;
- Figure 5 provides a schematic illustration of the retriever system of figure 4, with the the inflated state;
- Figure 6 is a schematic and lateral view of a retriever system similar to the one of figure 5;
- Figure 7 schematically and partially illustrates an example of an inflatable element in the inflated state, the retriever system being positionned right side up;
- Figure 8 is a similar view to figure 7, the retriever system being upside down;
   and
- Figures 9 and 10 schematically illustrate other examples of an inflatable element in the inflated state.

### 6. Detailed description

Figures 1 to 3, which relate to the prior art, have already been described above and are not discussed again.

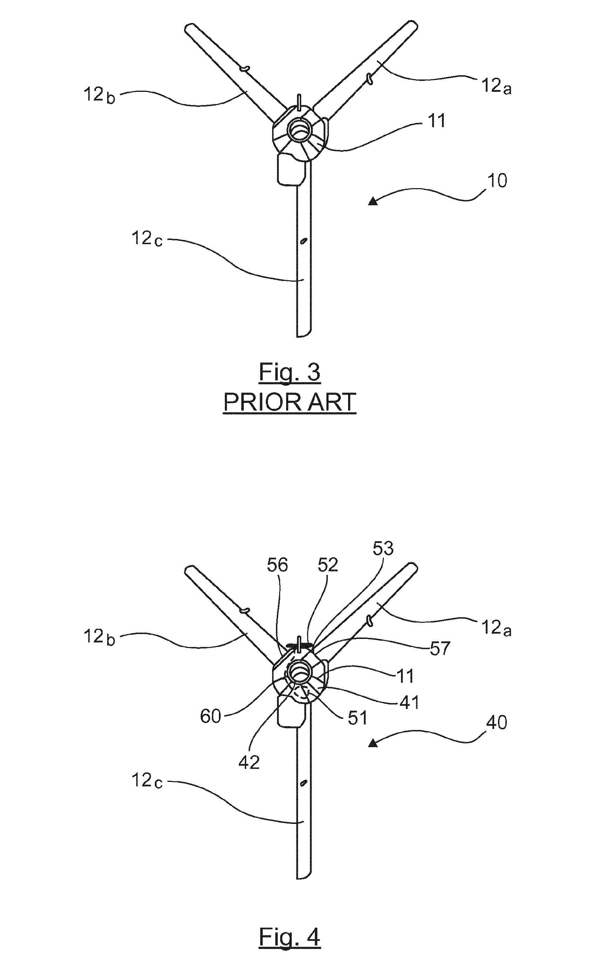

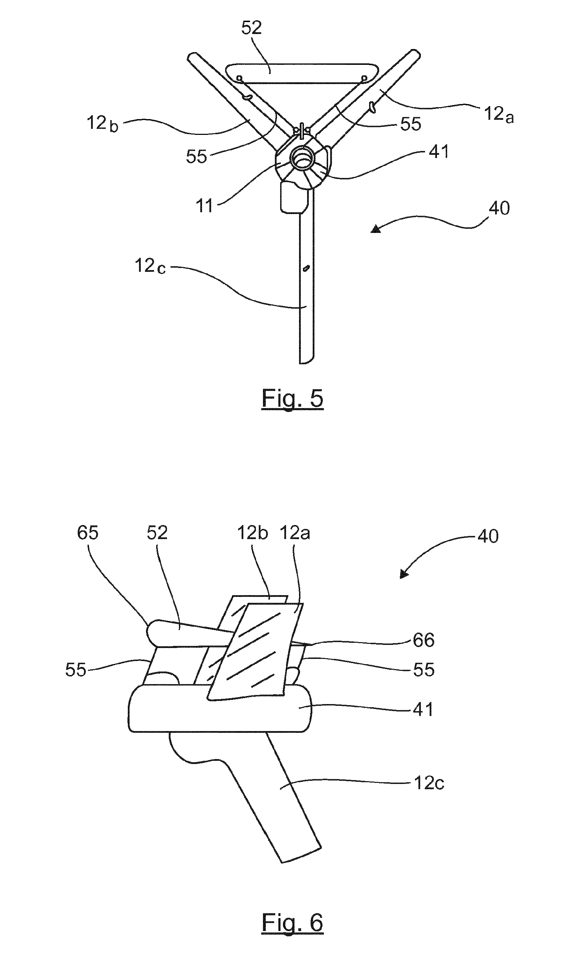

We now present, in relation to **figures 4** **and** **5****,** a retriever system 40 according to an embodiment of the invention.

The retriever system 40 includes a body 41 consisting in this embodiment of a navigation control device or bird. The body 41 includes, in this embodiment an inline module 42 placed in series along the streamer 20a (not shown in figure 4) and including a magnetic sensor (like a magnetometer, a compass or a hall sensor, not shown) and electronics (not shown). It provides depth control and lateral control (steering). The body 41 also includes a frame element 11, which is a tubular frame element in this example, freely rotating around the module 42. A swivel (not shown) can be used to ease rotation of the body 41 around the inline module 42, under tension.

In this embodiment, the body 41 consisting of a bird, there are wings 12 attached to the body 41, in this embodiment to the tubular frame element 11. There are in this example three wings, among which, in this example, two motorized upper wings 12a, 12b and a lower non-motorized wing (keel) 12c.

It is to be noted that the invention also includes the embodiment, not shown, in which there is no frame element 11, but only a body 41 forming the module 42 and onto which the wings 12 are attached.

The invention also covers the embodiments, not shown, in which the body does not belong to a navigation control device (bird) nor is part of a bird.

The invention is also not limited to the cases in which there are wings and/or a frame element.

The invention also covers the embodiments in which the body of the retriever system is placed in parallel along the streamer, and is for example clamped to the streamer.

According to the invention, the retriever system 40 also includes at least one inflating generator 51 and an inflatable element 52, the retriever system being configured to be in a rest state or in an active state. The inflatable element 52 is configured to be folded and stored in the rest state and to be inflated by the inflating generator and spread in the active state, the passage from the rest state to the active state being activated in predetermined conditions. The inflatable element 52 has the shape of a wing in the active state and includes two different portions, a first portion including a leading edge 65 and a second portion including a trailing edge 66.

The inflating generator 51 and/or the inflatable element 52 may be at least partially housed on the body 41 in the rest state.

The frame element 11 and the wings 12a, 12b and 12c may be easily removed from the module 42 before or when winding the cable of streamer for storage. The frame element 11 may be easily removed from the cable.

As the retriever system is not winded, when stored, it is protected from damages currently caused by this operation.

The inflating generator 51 is in this example housed within the frame element 11. It is to be noted that the inflating generator 51 may be a gas generator, such as a gas bottle, or a foam generator or a powder generator.

In the stored state shown in figure 4, in this example, the inflatable element 52 is housed between fastening points 56 and 57 of the two upper wings 12b and 12c.

The surface of the body 41 occupied by the inflatable element 52 in the stored state may be 400 mm long and 10 mm large. The inflatable element 52 may occupy a large surface of storage on the body, minimizing the occupied volume by maximizing the occupied surface. This configuration limits the hydrodynamic impact in the stored state and may make the blowing up more efficient, when the retriever system is activated.

In the inflated state shown in figure 5, the inflatable element 52 occupies a predetermined volume and has a predetermined shape being full of gas, thanks to the inflating generator 51. The inflatable element 52 is fixed to the body 41, in this example to the frame element 11 thanks to at least one fixation element, in this example at least two fixation elements 55. The fixation elements 55 are configured for fixing the inflatable element 52 to the external surface 53 of the tubular frame element 11.

According to the invention, the inflatable element 52 has the shape of an inflatable wing. As can be seen, in figure 5, the inflatable element 52 is configured in this embodiment to positive lift when the retriever system is activated.

Suitable cables 60 between the inflating generator 51 and the inflatable element 52 are provided so as to transfer instantaneously the gas from inflating generator 51 to the inflatable element 52 as soon as the retriever system is activated.

The inflatable element 52 may be in contact with water, when folded and inflated. There may be no need to waterproof the inflatable element. Alternatively, a cover, not shown, may wrap the inflatable element 52, such a cover for example tearing when the inflatable element blows up.

The retriever system may be configured so that it may be activated automatically in predetermined conditions. The retriever system may also be configured so that an operator in the vessel may manually activate the retriever system in predetermined conditions, if necessary.

These predetermined conditions may be a loss of control of the navigation control device, external failures such as a failure of the vessel or of a monitoring system, or noise on the seismic cable. These predetermined conditions may also be a portion of streamer being cut, for example by a shark, a high stress, excessive torsion or by hanging to an anchor. These predetermined conditions may also occur when an excessive depth is reached by the retriever system or by the bird. The predetermined conditions may include several predetermined thresholds measured by corresponding sensors, such as a predetermined depth, a detection of an overload of the streamer, a detection of a twist of the streamer detected by accelerometers, and so on.

**Figure 6** shows an example of inflatable element 52 in the inflated state. The shape of a wing of the inflatable element 52 may be optimized to efficiently lift the bird and streamer. The inflatable element 52 includes the leading edge 65 at the head end of the inflatable element 52 and the trailing edge 66 at the tail end of the inflatable element 52.

As can be seen, in figure 6, the thickness of the leading edge 65 is relatively large, whereas the thickness of the trailing edge 66 is quite thin.

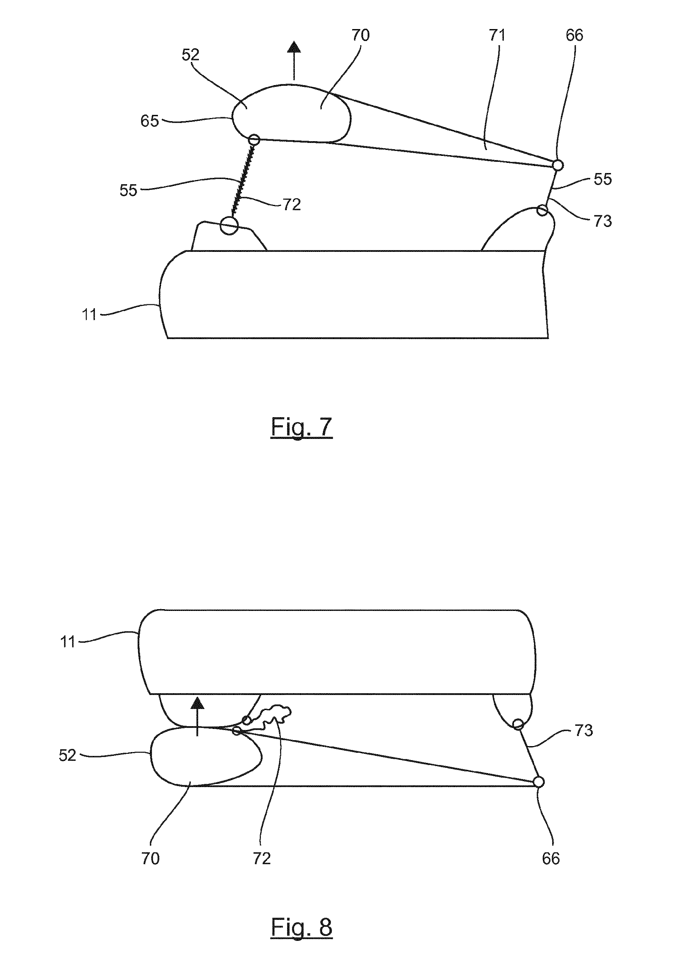

Only the inflatable element 52 in the inflated state and part of the frame element 11 have been illustrated in **figures 7 and 8****.**

In figure 8, the body consisting of a navigation control device is upper side up. In this example, the inflatable element 52 includes two different portions, a first portion and a second portion. In this embodiment, the first portion includes a buoyant component 70 including the leading edge 65. In this embodiment, the second portion includes a rigid component 71 including the trailing edge 66.

The retriever system is configured to lift so as to surface the streamer, and in this example, the navigation control device according to the arrow as shown.

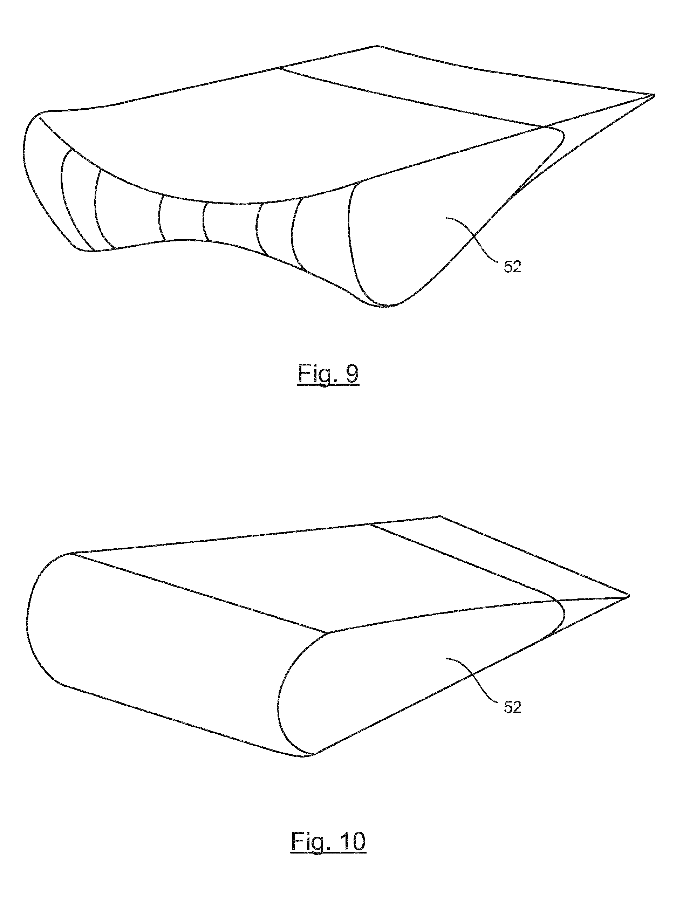

The buoyant component 70 is fastened to the frame element 11 thanks to a flexible fixation element 72 that, in figure 8, is in a stressed state whereas in figure 9, this flexible fixation element 72 is in a loosen state so as to always lift according to the arrow the buoyant component 70 in order to surface the navigation control device, the navigation control device being down (figure 8) or up (figure 7).

The trailing edge 66 of the inflatable component 52 is fastened to the tubular frame element 11 according to a rigid fixation element 73. In the situations shown in figures 7 and 8, the rigid fixation element 73 creates the same length between the tubular frame element 11 and the trailing edge 66.

Thanks to this configuration of the fixation elements, the inflatable element 52 is effective to positive lift the bird, whatever the position of the retriever system.

Indeed, such configuration of the inflatable element when inflated may stabilize the bird rolling as it is configured to resist the rotation of the tubular frame element by creating friction torque and an opposite torque to counteract torque generated by the wings of the bird.

Bird forces are only hydrodynamic, bird being neutral in water.

In case of a failure of a bird at non-null speed, stabilizing forces generated by the retriever system are both hydrodynamic and hydrostatic forces. The stabilizing forces are comparable to the bird forces so that the retriever system can stabilize bird rolling and bird depth. Thus, if a failure occurs on only one bird, the stabilizing forces will stabilize the bird and can keep the portion of streamer at the expected depth to continue the acquisition.

In case of a failure of the retriever system at non-null speed, if a retriever system is spuriously triggered, the bird forces can counteract the stabilizing forces that enable to keep the portion of streamer at the expected depth to continue the acquisition.

In case of a failure of a portion of cable no more towed at null speed, there are no hydrodynamic forces and the retriever system generates hydrostatic forces to lift bird and portion of streamer.

**Figures 9 and 10** show differents shapes and configurations of the inflatable element 52, in the inflated state.

In these embodiments, the inflatable element 52 includes an internal structure (not shown), such as fiber interlacing, for example, so as to create a particular predetermined external shape, when inflated, as shown, and provide a stiffness to the inflatable element when inflated. The internal structure may allow for example the inflatable element to have the shape of a wing, with the leading edge and the trailing edge. The shape of the inflatable element, once inflated, may be foreseen thanks for example to this internal structure.

In the specification and claims, the expression "includes a" has to be understood as meaning "includes at least one", unless expressly written.

## Claims

1. A retriever system (40) for a streamer including:
- a body (41), placed in series along the streamer or in parallel with the streamer,
- an inflating generator (51) and
- an inflatable element (52) being configured to be folded in a rest state and to be inflated by the inflating generator (51) and spread in an active state, the inflatable element (52) having a shape of a wing in the active state and including two different portions, a first portion including a leading edge (65) and a second portion including a trailing edge (66), the passage from the rest state to the active state being activated in predetermined conditions.

2. The retriever system according to claim 1, wherein the inflating generator (51) and/or the inflatable element (52) is(are) at least partially housed on the body (41) in the rest state.

3. The retriever system according to claim 2, wherein the inflating generator (51) is housed inside the body (41) and the inflatable element (52) is housed on an external surface of the body (41) in the rest state.

4. The retriever system according to any of claims 1 to 3, wherein the body (41) is placed in series along the streamer, wherein the body (41) includes a module (42) and a frame element (11) freely rotating around the at least one module (42).

5. The retriever system according to any of claims 1 to 4, wherein the body is a part of a navigation control device and wherein the navigation control device includes a plurality of wings (12a, 12b, 12c) attached to the body (41) or to the frame element (11), preferably three wings.

6. The retriever system according to any of the claims 1 to 4, wherein the retriever system is collocated to a navigation control device.

7. The retriever system according to claim 4, wherein the inflatable element (52) is housed on an external surface of the frame element (11) in the rest state and the inflating generator (51) is housed inside the frame element (11).

8. The retriever system according to any of the claims 1 to 7, wherein the inflating generator (51) is chosen in the group consisting of a gas generator, preferably a gas bottle, a foam generator and a powder generator.

9. The retriever system according to any of claims 1 to 8, wherein the inflatable element (52) is configured to positive lift at least part of the streamer when activated.

10. The retriever system according to any of claims 1 to 9, including at least one fixation element (55), preferably at least two fixation elements, of the inflatable element (52) for attaching the inflatable element to the body.

11. The retriever system according to claim 10, wherein the fixation elements (55) include at least one rigid fixation element (73) for fixing the first portion, said rigid fixation element (73) having a predetermined length, and at least one flexible fixation element (72) for fixing the leading edge, said flexible fixation element (72) being configured for being able to be in two different states, a first loosen state and a second compressed state depending on the configuration of the retriever system when the inflatable element (52) is inflated.

12. A retriever system according to claim 5, wherein the plurality of wings (12a, 12b, 12c) are fixed to the body (41) at fastening points (56, 57) and include two upper wings (12a, 12b) and a lower wing (12c), wherein the inflatable element (52) is configured for placing between the two upper wings (12a, 12b) in the active state, and wherein the portion of the external surface (53) of the body (41) onto which the inflatable element (52) is situated when folded is located between the fastening points (56, 57) of the two upper wings (12a, 12b).

13. The retriever system according to any of the preceding claims, wherein at least part of the inflatable element (52) is configured for being in contact with water before blowing up, possibly wrapped with a cover, is configured for being in contact with water before blowing up.

14. The retriever system according to any of the preceding claims, configured for being either automatically or manually activated.

15. The retriever system according to any of the preceding claims, wherein the inflatable element is equipped with a pressure relief valve that limits the internal pressure when the inflatable element moves upward, once inflated.
